# EUROPEAN PATENT APPLICATION

(11) **EP 4 265 455 A1**
(43) Date of publication of application: **25.10.2023**
(21) Application number: 21906318.7
(22) Date of filing: 30.11.2021
(51) Int. Cl.: B60K 11/04, E02F 9/00, E02F 9/20, F01P 3/20

(54) **CONSTRUCTION MACHINE**

(30) Priority: 18.12.2020 JP 2020210451
(71) Applicant: Yanmar Holdings Co., Ltd., Osaka-shi, Osaka, 530-0013 (JP)
(72) Inventor: MORIGUCHI, Kazuma, Chikugo-shi, Fukuoka 833-0055 (JP); TERASHIMA, Jun, Chikugo-shi, Fukuoka 833-0055 (JP); KITAHARA, Satoshi, Chikugo-shi, Fukuoka 833-0055 (JP); YAMANAKA, Keishi, Osaka-shi, Osaka 530-0013 (JP); KANEDA, Kensuke, Osaka-shi, Osaka 530-0013 (JP)
(74) Representative: Novagraaf International SA
(86) International application number: PCT/JP2021/043730
(87) International publication number: WO 2022/130955

(57) **Abstract**

The present invention discloses a configuration for cooling both an electric motor as a drive source and a device for supplying electric power to the electric motor using a cooling medium such as water with a view to achieving efficient cooling without any cost increase. The present invention comprises: an electric motor 12 serving as a drive source; a power feeder 46 for supplying electric power to the electric motor 12 from outside; a cooling flow channel 60 through which coolant water is circulated for cooling the electric motor 12 and the power feeder 46; and a radiator 61 which cools the coolant water flowing through the cooling flow channel 60. The cooling flow channel 60 has a bypass flow channel section 65: that branches from a first flow channel section 60a connected to an inflow side of an intra-power-feeder flow channel, which is a coolant water flow channel disposed in the power feeder 46; that joins a second flow channel section 60b connected to an outflow side of the intra-power-feeder flow channel; and that causes the coolant water to skirt around the power feeder 46.

## Description

### TECHNICAL FIELD

The present invention relates to a construction machine provided with an electric motor as a drive source.

### BACKGROUND ART

Conventionally, for example, with regard to a construction machine such as an excavating work machine, there is an electric machine provided with an electric motor instead of an engine that uses gasoline for fuel as a drive source. For example, there is an electric excavating work machine that has a lower traveling body and an upper swiveling body swivelable with respect to the lower traveling body, and the electric excavating work machine is configured to have the upper swiveling body equipped with an electric motor (refer to, for example, Patent Literature 1).

Patent Literature 1 discloses an electric hydraulic shovel provided with an electric motor that drives a hydraulic pump, an inverter device that controls the electric motor and provided with a function to drive the electric motor by electric power supply from a battery mounted on the machine body or from an external commercial power source. The electric hydraulic shovel disclosed in Patent Literature 1 has a coolant water system comprising a coolant water pipe for the inverter device and a coolant water pipe for a converter device that receives connections from a battery and a commercial power supply.

### CITATION LIST

### Patent Literature

Patent Literature 1: Japanese Unexamined Patent Application Publication No. 2010-121327

### DISCLOSURE OF INVENTION

### PROBLEMS TO BE SOLVED BY THE INVENTION

Patent Literature 1 indicates with regard to a coolant water system that a coolant water pipe of a converter device and a coolant water pipe of an inverter device are connected with each other so as to be disposed in series. However, Patent Literature 1 does not disclose any specific configuration with regard to the coolant water system.

An object of the present invention is to provide a construction machine that can efficiently perform cooling without any cost increase with regard to a configuration in which an electric motor as a drive source and a device for supplying electric power to the electric motor are cooled by a cooling medium such as water.

### MEANS FOR SOLVING THE PROBLEMS

A construction machine according to the present invention comprises an electric motor as a drive source, a power feeder that supplies electric power to the electric motor from outside, a cooling flow channel that circulates a cooling medium for cooling the electric motor and the power feeder, and a radiator that cools the cooling medium flowing in the cooling flow channel, wherein the cooling flow channel has a bypass flow channel section that branches from a flow channel section in communication with an inflow side of an intra-power-feeder flow channel, which is a flow channel of the cooling medium provided in the power feeder, that joins a flow channel section in communication with an outflow side of the intra-power-feeder flow channel and that causes the cooling medium to skirt around the power feeder.

In the construction machine according to another aspect of the present invention, the electric motor is provided at a downstream side of a flow of the cooling medium starting from the radiator in the cooling flow channel with respect to the power feeder.

In the construction machine according to another aspect of the present invention, the cooling flow channel has a flow rate adjusting section that adjusts a flow rate of the cooling medium that passes through the bypass flow channel section.

The construction machine according to another aspect of the present invention includes a battery that supplies electric power to the electric motor and a flow rate controlling section that controls adjustment of a flow rate of the cooling medium by the flow rate adjusting section, wherein the flow rate controlling section controls the flow rate adjusting section so that a bypass flow rate that is the flow rate of the cooling medium passing through the bypass flow channel section in a mode in which electric power supply to the electric motor is carried out only by the battery is larger than the bypass flow rate in a mode in which electric power supply to the electric motor is carried out by the power feeder from outside or the bypass flow rate in a mode in which electric power from outside is stored in the battery by the power feeder.

The construction machine according to another aspect of the present invention has an inverter device that controls the electric motor provided between the electric motor and the power feeder in the cooling flow channel, wherein the cooling flow channel has a second bypass flow channel section that branches from a flow channel section in communication with an inflow side of a flow channel of the cooling medium provided in the inverter device, that joins a flow channel section in communication with an outflow side of the flow channel of the cooling medium provided in the electric motor and that causes the cooling medium to skirt around the inverter device and the electric motor, and a second flow rate adjusting section that adjusts a flow rate of the cooling medium that passes through the second bypass flow channel section.

In the construction machine according to another aspect of the present invention, the cooling flow channel, which is provided with a battery for suppling electric power to the electric motor, has a bypass flow channel section for a battery that branches from a flow channel section in communication with an inflow side of an intra-battery flow channel, which is a flow channel of the cooling medium provided in the battery, that joins a flow channel section in communication with an outflow side of the intra-battery flow channel and that causes the cooling medium to skirt around the battery, and a flow rate adjusting section for a battery that adjusts a flow rate of the cooling medium passing through the bypass flow channel section for the battery.

In the construction machine according to another aspect of the present invention, the battery is provided at an upper stream side of a flow of the cooling medium starting from the radiator in the cooling flow channel with respect to the electric motor and the power feeder.

In the construction machine according to another aspect of the present invention, there is disposed below the radiator a confluence section of the bypass flow channel section with respect to a flow channel section in communication with an outflow side of the intra-power-feeder flow channel.

### EFFECT OF THE INVENTION

According to the present invention, efficient cooling can be performed without any cost increase with regard to a configuration in which an electric motor as a drive source and a device for supplying electric power to the electric motor are cooled by a water cooling system.

### BRIEF DESCRIPTION OF DRAWINGS

FIG. 1 is a left side diagram of an excavating work machine according to one embodiment of the present invention.
FIG. 2 is a perspective diagram from left front of the excavating work machine according to one embodiment of the present invention.
FIG. 3 is a block diagram illustrating a device configuration provided by the excavating work machine according to one embodiment of the present invention.
FIG. 4 is a perspective diagram illustrating one example of an installation manner of the device configuration provided by the excavating work machine of according to one embodiment of the present invention.
FIG. 5 is a diagram illustrating a power feeding mode in the excavating work machine according to one embodiment of the present invention. FIG. 5A is an explanatory diagram of a battery power feeding mode. FIG. 5B is an explanatory diagram of an external power feeding. FIG. 5C is an explanatory diagram of a power storage mode.
FIG. 6 is a diagram illustrating a cooling circuit provided by the excavating work machine according to a first embodiment of the present invention.
FIG. 7 is a diagram illustrating a cooling circuit provided by the excavating work machine according to a second embodiment of the present invention.
FIG. 8 is a diagram illustrating a modified example of the cooling circuit provided by the excavating work machine according to a second embodiment of the present invention.
FIG. 9 is a diagram illustrating a cooling circuit provided by the excavating work machine according to a third embodiment of the present invention.
FIG. 10 is a diagram illustrating a cooling circuit provided by the excavating work machine according to a fourth embodiment of the present invention.
FIG. 11 is a diagram illustrating a cooling circuit provided by the excavating work machine according to a fifth embodiment of the present invention.
FIG. 12 is a perspective diagram illustrating one example of an installation manner of the device configuration provided by the excavating work machine according to a sixth embodiment of the present invention.

### DESCRIPTION OF EMBODIMENTS

An object of the present invention is to improve cooling efficiency at low cost by contriving a circuit configuration for circulating a cooling medium in an electric construction machine provided with a configuration in which an electric motor as a drive source and a device for supplying electric power to the electric motor are cooled by a cooling medium such as water. Descriptions will hereinafter be made on embodiments of the present invention with reference to drawings.

In embodiments of the present invention, descriptions will be made on an excavating work machine (shovel), which is a swiveling work vehicle, as an example of a construction machine according to the present invention. However, the construction machine according to the present invention is not limited to excavating work machines, and can be widely applied to other types of construction machines such as a bulldozer, a crane work machine, a compact truck loader, a skid steer loader, and a wheel loader.

### First Embodiment

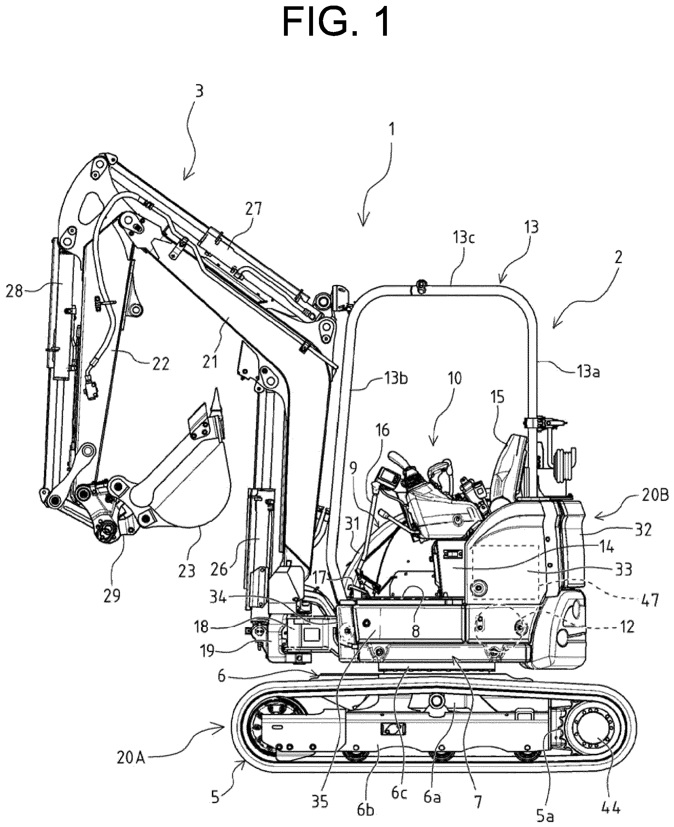

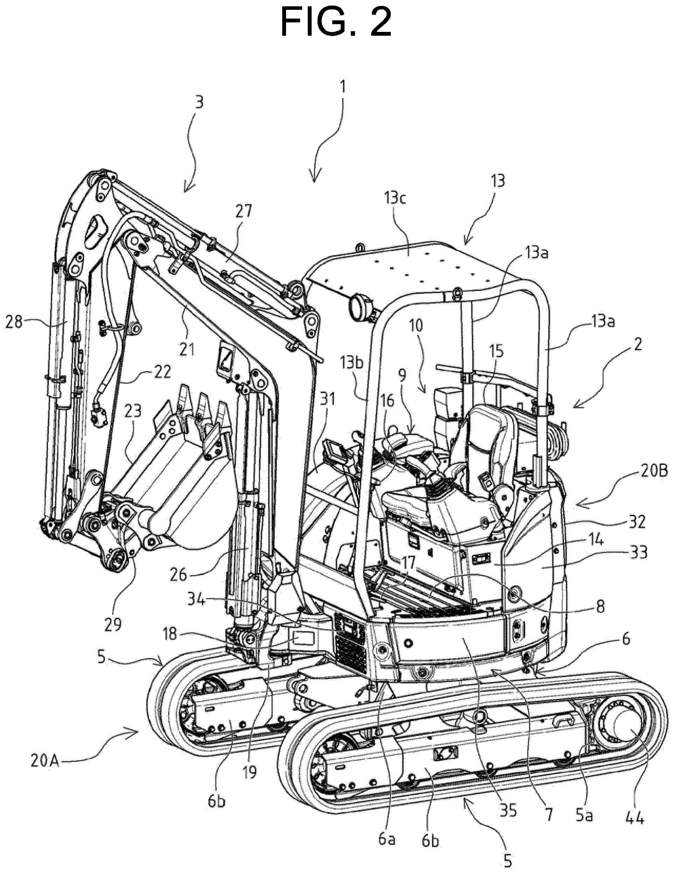

Descriptions will be made on an a first embodiment according to the present invention. Descriptions will be made on an overall configuration of an excavating work machine 1 according to the present embodiment with reference to FIG. 1 and FIG. 2. As illustrated in FIG. 1 and FIG. 2, the excavating work machine 1 includes a traveling device 2 as a traveling vehicle body capable of self-traveling, and an excavating device 3 as a working section mounted to the traveling device 2.

The traveling device 2 is a portion forming a main machine of the excavating work machine 1 and has a pair of right and left crawler type traveling sections 5, a truck frame 6 as a base plate supporting the right and left traveling sections 5, and a swiveling frame 7 disposed on the truck frame 6.

The traveling section 5 has a configuration in which a crawler is wound around a rotating body such as a plurality of sprockets supported by a predetermined frame portion constituting the truck frame 6. The traveling section 5 is provided with a drive sprocket 5a, which is a drive wheel, as a rotating body at a rear end thereof. The truck frame 6 has a center frame section 6a located in a middle part between the left and the right traveling sections 5, and side frame sections 6b disposed on both left and right sides of the center frame section 6a.

The swiveling frame 7 is formed in a substantially circular shape in a plane view, and can be swiveled with respect to the truck frame 6 either in a left direction or a right direction around a vertical axis by a swiveling support section 6c that is provided at an upper side of the truck frame 6. In addition, the swiveling frame 7 is configured to be capable of swiveling within left and right widths of the left and the right traveling sections 5, that is to say, within a width between a left outer edge of the left traveling section 5 and a right outer edge of the right traveling section 5. This enables small swiveling work to be performed by the excavating work machine 1.

There is provided on the swiveling frame 7 a driving section 10 having a flat floor section 8. The floor section 8 is disposed at a left portion of a front half portion on the swiveling frame 7. A tank section 9 is disposed at a right side of the driving section 10. The left side of the floor section 8 serves as an entrance/exit for an operator with respect to the driving section 10. In addition, there is provided at a rear portion on the swiveling frame 7 an electric motor 12, which is a motor, as a drive source.

The driving section 10 is used to drive and operate the traveling device 2 and the excavating device 3. On the swiveling frame 7, a canopy 13 is provided with respect to the driving section 10. The canopy 13 has a pair of left and right rear pillar sections 13a erected above a motor section, a pair of left and right front pillar sections 13b erected at a front end of the floor section 8, and a canopy roof section 13c disposed between the front and the rear pillar sections. The canopy roof section 13c covers the driving section 10 from above.

The driving section 10 has provided at a rear side of the floor section 8 a support table for a driving seat 14, which is a seat mount, and a driving seat 15 is provided on the support table for the driving seat 14. There is provided forward of the driving seat 15 a pair of left and right traveling levers 16 extending upward from the floor section 8. There is arranged at both the left and the right sides of the traveling lever 16 above the floor section 8 a plurality of operation pedals 17 for work. Moreover, the driving section 10 has provided around the driving seat 15 a work operation lever for operating a working section of the excavating device 3 and an operation panel section that has various kinds of an operation section such as a switch.

The excavating work machine 1 has a lower traveling body 20A, which is configured to include the truck frame 6 and the traveling sections 5 supported at both the left and the right sides of the truck frame 6, and an upper swiveling body 20B as a machine body swivelably mounted on the lower traveling body 20A. The upper swiveling body 20B is formed by including the swiveling frame 7, which is a frame that constitutes the machine body, and the driving section 10 provided on the swiveling frame 7.

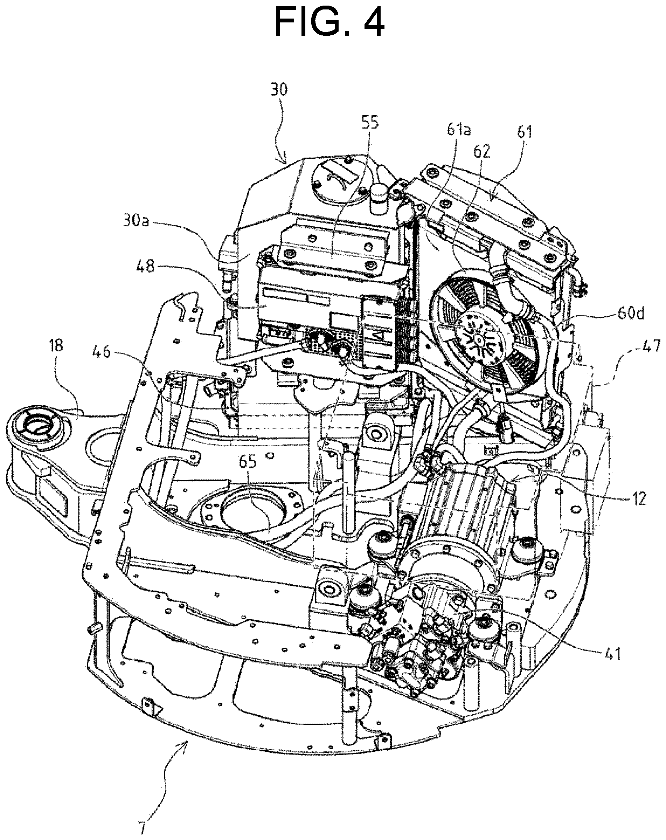

The tank section 9 that is disposed at a right side of the driving section 10 is provided with a hydraulic oil tank 30 that contains hydraulic oil (refer to FIG. 4). The hydraulic oil tank 30 is disposed at a right front portion of the swiveling frame 7. The hydraulic oil in the hydraulic oil tank 30 is supplied to a hydraulic cylinder and the like provided in the excavating work machine, including a hydraulic cylinder for constituting the excavating device 3.

The hydraulic oil tank 30 is covered by a right cover section 31. The right cover section 31 is a cover section covering the hydraulic oil tank 30 and a radiator 61 provided at a rear side of the hydraulic oil tank 30 and forms a right side portion of an exterior cover section that forms an exterior of the upper swiveling body 20B. The exterior cover section of the upper swiveling body 20B includes a rear cover section 32 forming a portion at a rear side of the exterior cover section, a left cover section 33 forming a portion at a left side thereof, a front lower cover section 34 covering a portion at a front lower side of the upper swiveling body 20B, and a left front cover section 35 provided at a lower side of a left end of the floor section 8. Either of a left side or a right side of the rear cover section 32 is rotatably supported by a hinge section. The left cover section 33 covers a left side of the support table for the driving seat 14.

The excavating device 3 is a front working device that is disposed at a front side of the traveling device 2. At a left and right middle part of the swiveling frame 7, a support bracket 18 that supports the excavating device 3 is protruded forward. The boom support bracket 19, which forms a base end part of the excavating device 3, is rotatably supported to the support bracket 18 as a rotary axis direction in a vertical direction of the boom support bracket 19. The excavating device 3 is provided so as to swing with respect to the swiveling frame 7 to the left and right by means of a swing hydraulic cylinder (not illustrated) that is disposed at a right side of the boom support bracket 19 and between the boom support bracket 19 and the swiveling frame 7.

The excavating device 3 has a boom 21 that has a bending shape like a boomerang shape in a side view and forms a portion at a base side of the excavating device 3, an arm 22 that is connected to a distal end side of the boom 21, and a bucket 23 that is attached to a distal end part of the arm 22. The excavating device 3 also has a boom cylinder 26 that causes the boom 21 to rotatably operate, an arm cylinder 27 that causes the arm 22 to rotatably operate, and a working tool cylinder 28 that causes the bucket 23 to rotatably operate. These cylinders are all hydraulic cylinders.

The bucket 23, as an attachment for work, is detachably connected to the distal end part of the arm 22 via an attachment detachable device 29. In the excavating device 3, another device such as a grapple or a breaker is attached instead of the bucket 23 in accordance with work contents.

In the excavating work machine 1 that has the above- mentioned configuration, desired operating or work is performed when an operator, who is seated on the driving seat 15, operates as appropriate the traveling lever 16, the work operation lever, and the like. Specifically, for example, an operation of the traveling lever 16 allows the traveling device 2 to travel straightly back and forth or to swivel and travel to the left and right. In addition, an operation of the work operation lever allows excavating work to be performed by the excavating device 3.

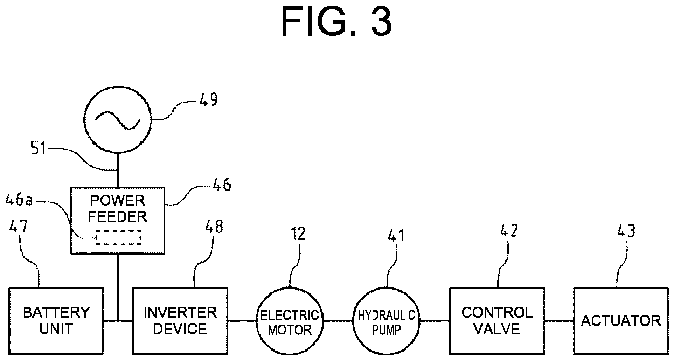

The excavating work machine 1 according to the present embodiment is an electric construction machine provided with an electric motor 12 as a drive source. As illustrated in FIG. 3, an electric motor 12 is a motor for driving a pump that drives a hydraulic pump 41. The electric motor 12 is a three-phase AC motor, for example, and is driven by an AC power supply. The hydraulic pump 41 is driven by the electric motor 12 to supply hydraulic oil in the hydraulic oil tank 30 to an actuator 43 via a control valve 42.

The actuator 43 is a generic term for various kinds of hydraulic actuators provided by the excavating work machine 1. The actuator 43 includes, for example, a boom cylinders 26, an arm cylinder 27, a working tool cylinder 28, a swing hydraulic cylinder, and a hydraulic cylinder for swiveling.

The control valve 42 controls a flow of pressure oil to each hydraulic actuator as the actuator 43. The control valve 42 is composed of a plurality of direction switch valves corresponding to each hydraulic actuator and controls the amount and destination of pressure oil supplied from the hydraulic oil tank 30 by driving the hydraulic pump 41 through an operating control of the direction switch valves or the like. A control for supplying pressure oil to the actuator 43 causes an operating of the excavating device 3, a swiveling operating of the upper swiveling body 20B or the like to be performed.

As illustrated in FIG. 4, the electric motor 12 is transversely installed at a rear lower portion of the swiveling frame 7, with an axis direction of a drive shaft of the electric motor 12 set to be a left-right direction. The hydraulic pump 41 is disposed at a left side of the electric motor 12. The hydraulic pump 41 has its rotating shaft connected to the drive shaft of the electric motor 12 via a coupling and is driven in accordance with rotation of the drive shaft of the electric motor 12 to deliver hydraulic oil. The control valve 42 is disposed at a predetermined position on the swiveling frame 7 in the upper swiveling body 20B (for example, at a position to the left side of a front portion of the swiveling frame 7).

The excavating work machine 1 also has a pair of left and right hydraulic motors for traveling 44, 44 (refer to FIG. 1 and FIG. 2). The hydraulic motor for traveling 44 is driven by receiving a supply of pressure oil from the control valve 42 and is provided so as to rotatably drive the drive sprocket 5a in each traveling section 5 while being attached to a predetermined portion such as the side frame section 6b of the truck frame 6. Each of the left and right hydraulic motors for traveling 44, 44 drives the traveling section 5, which allows the traveling device 2 to travel straightly back and forth or to swivel and travel to the left and right.

As illustrated in FIG. 3, the excavating work machine 1 is configured to be electrically connected directly or indirectly to the electric motor 12 and includes a power feeder 46 that supplies electric power to the electric motor 12 from outside, a battery unit 47 that is a battery for supplying electric power to the electric motor 12, and an inverter device 48 that controls the electric moto 12r.

As illustrated in FIG. 3, the power feeder 46 is electrically connected to a commercial power source 49, which is an external power source, by means of an electric power supply line 51 for external electric power supply. In other words, the electric power supply line 51 enables the power feeder 46 to receive electric power from the commercial power source 49 as the external power source. The electric power supply line 51 is formed by a cable or the like. In addition, the power feeder 46 is electrically connected to each of the battery unit 47 and the inverter device 48.

The power feeder 46 has a function of converting AC power (AC voltage) supplied from the commercial power source 49 into DC power (DC voltage) to output to the inverter device 48, a function of converting AC power supplied from the commercial power source 49 into DC power to output to the battery unit 47, and a function of outputting DC power supplied from the battery unit 47 to the inverter device 48. The power feeder 46 is configured so as to switch a function that is effective by switching a mode.

The power feeder 46 controls a current value and a voltage value of the supplied electric power. Specifically, the power feeder 46 has a rectifier circuit that converts AC power supplied from the commercial power source 49 into DC power and that boosts voltage of the power to a predetermined voltage, and a chopper circuit that steps down voltage of the DC power obtained by the rectifier circuit when supplying it to the battery unit 47. This chopper circuit has a function of boosting voltage of DC power supplied from the battery unit 47.

Moreover, the power feeder 46 has a connection terminal for a battery for inputting/outputting electric power between the power feeder 46 and the battery unit 47 and a connection terminal for an inverter for outputting electric power to the inverter device 48. The connection terminal for an inverter causes the power feeder 46 to selectively output either the DC power obtained by the rectifier circuit or the DC power obtained by the chopper circuit to the inverter device 48.

In addition, the power feeder 46 has a relay switch provided between the rectifier circuit and the connection terminal for an inverter and a relay switch provided between the connection terminal for a battery and the chopper circuit. The power feeder 46 has an arithmetic control section 46a that controls an operating of the relay switch or the chopper circuit. The arithmetic control section 46a controls, for example, the relay switch and the chopper circuit in response to an instruction signal from a changeover switch through operation of the mode changeover switch provided in the driving section 10. The arithmetic control section 46a is composed of, for example, a microcomputer.

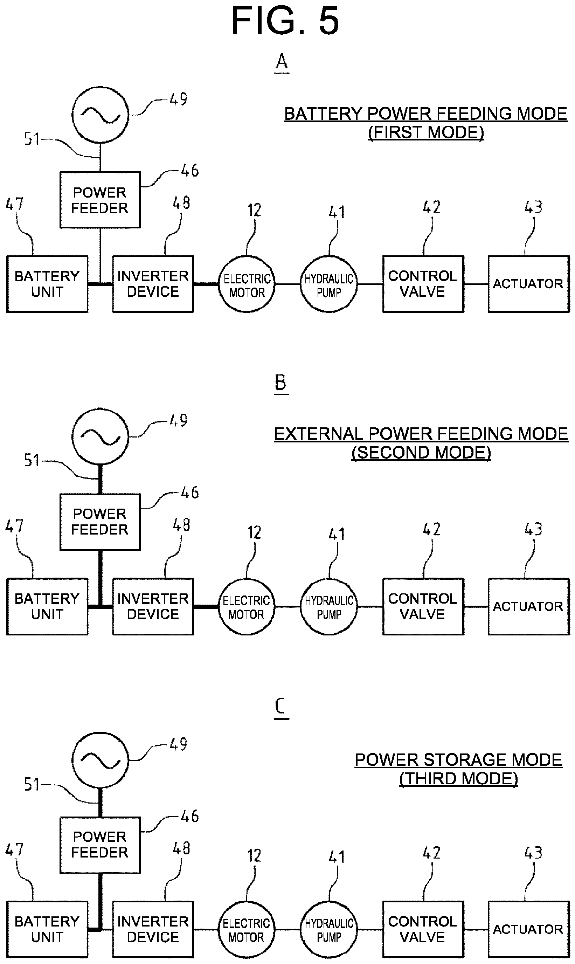

The excavating work machine 1 has the following three power feeding modes as a mode that can be switched through operation of the mode changeover switch. That is to say, the excavating work machine 1 has, as a first mode, a battery power feeding mode, in which electric power is supplied to the electric motor 12 only by the battery unit 47 (refer to FIG. 5A). The excavating work machine 1 also has, as a second mode, an external power feeding mode, in which electric power is supplied to the electric motor 12 from the external commercial power source 49 by means of the power feeder 46 (refer to FIG. 5B). Furthermore, the excavating work machine 1 has, as a third mode, a power storage mode, in which electric power from the external commercial power source 49 is stored in the battery unit 47 by means of the power feeder 46 (refer to FIG. 5C).

The external power feeding mode includes a case of performing at least either of charging the battery unit 47 from the commercial power source 49 via the power feeder 46 or electric power supply from the battery unit 47 to the electric motor 12. In other words, the electric motor 12 is driven by electric power supply from the battery unit 47 in the battery power feeding mode and by power supply from the commercial power source 49 in the external power feeding mode and in some cases, receives from the battery unit 47 electric power supply for driving. FIG. 5A, FIG. 5B, and FIG. 5C illustrate with bold lines wiring route sections where electric power is supplied. It is noted that electric power supplied from the commercial power source 49 or the battery unit 47 is supplied to the electric motor 12, an electric fan 62, which will be described later, and the like after voltage of the power is stepped down by a DC/DC converter.

In a case where the battery power feeding mode is selected through operation of the mode changeover switch, the arithmetic control section 46a controls opening and closing of the relay switch as appropriate and controls the chopper circuit to cause electric power supply from the battery unit 47 to the inverter device 48. In addition, in a case where the external power feeding mode is selected, the arithmetic control section 46a controls the opening and closing of the relay switch as appropriate, converts AC power supplied from the commercial power source 49 into DC current by the rectifier circuit, and supplies electric power to the inverter device 48. Furthermore, in a case where the power storage mode is selected, the arithmetic control section 46a controls the opening and closing of the relay switch as appropriate, converts AC power supplied from the commercial power source 49 to DC current by the rectifier circuit, steps down voltage of the power by the chopper circuit to output to the battery unit 47, thereby charging the battery unit 47.

As illustrated in FIG. 4, the power feeder 46 is disposed below the hydraulic oil tank 30 in the swiveling frame 7 and is provided in a state of being supported by a predetermined support member.

The battery unit 47 is a power source provided by the excavating work machine 1. The battery unit 47 is formed by unitizing a plurality of battery modules. The battery module is composed of a secondary battery such as a lead-acid battery or a lithium ion battery. The battery unit 47 supplies DC current to the inverter device 48.

As illustrated by the double dotted line in FIG. 4, the battery unit 47 has a rectangular battery body and is disposed at a rear portion of the swiveling frame 7 so as to position the battery body above the electric motor 12 in the swiveling frame 7.

The inverter device 48 controls output of the electric motor 12 under control of electric power output to the electric motor 12. Specifically, the inverter device 48 converts DC power supplied from the battery unit 47 into AC power to supply to the electric motor 12. In addition, the inverter device 48 supplies AC power supplied from the commercial power source 49 via the power feeder 46 to the electric motor 12 as a predetermined voltage.

Specifically, the inverter device 48 has an inverter circuit that generates AC power from DC power to supply to the electric motor 12, an arithmetic control section that controls this inverter circuit, and a rectifier circuit that converts via the power feeder 46 AC power supplied from the commercial power source 49 into DC power ant that boosts voltage of the power to output to the inverter circuit. The arithmetic control section is composed of, for example, a microcomputer.

In the external power feeding mode, the inverter device 48 converts by the rectifier circuit AC power supplied from the commercial power source 49 via the power feeder 46 into DC power to outputs to the inverter circuit, and generates AC power in the inverter circuit to supply to the electric motor 12. On the other hand, in the battery power feeding mode, the inverter device 48 receives in the inverter circuit an input of DC power supplied from the battery unit 47 and generates AC power in the inverter circuit to supply to the electric motor 12.

As illustrated in FIG. 4, the inverter device 48 is provided at an inner left and right side (left side) of the hydraulic oil tank 30 at a front portion of a right side of the swiveling frame 7, which is at a swiveling center side of the upper swiveling body 20B. The inverter device 48 has an outer shape like a substantially rectangular thick plate, and is provided along a left side face section 30a of the hydraulic oil tank 30 while being supported to the left side face section 30a by a predetermined support member 55.

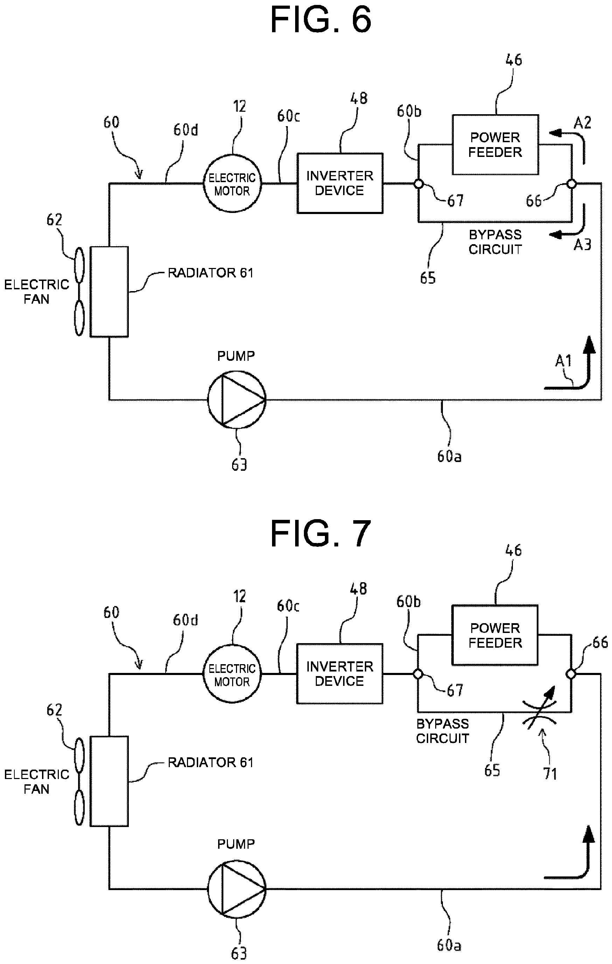

The excavating work machine 1 with the above-mentioned configuration is provided with a cooling system for cooling various kinds of equipment devices. As illustrated in FIG. 6, the excavating work machine 1 has, as a cooling system, a cooling flow channel 60 that circulates coolant water as a cooling medium for cooling the electric motor 12 and the power feeder 46 and a radiator 61 provided in the cooling flow channel 60 to cool the coolant water flowing through the cooling flow channel 60.

The excavating work machine 1 applies the electric motor 12, the inverter device 48, and the power feeder 46 as objects to be cooled by the coolant water flowing through the cooling flow channel 60. In other words, the excavating work machine 1 has therein a cooling circuit so configured that coolant water is circulated by the radiator 61, the electric motor 12, the inverter device 48, the power feeder 46, and the flow channel section that connects flow channels for coolant water between these equipment devices.

Additionally, in the cooling system of the excavating work machine 1, the electric motor 12 is disposed at a downstream side of a flow of coolant water starting from the radiator 61 in the cooling flow channel 60 with respect to the power feeder 46. In the cooling circuit according to the present embodiment, the electric motor 12 is provided at a downstream side of the inverter device 48, which is interposed between the electric motor 12 and the power feeder 46. That is to say, with regard to the cooling system, the excavating work machine 1 is provided with the inverter device 48 controlling the electric motor 12 between the electric motor 12 and the power feeder 46 in the cooling flow channel 60.

Radiator 61 is a heat exchanger for cooling various kinds of equipment devices and cools coolant water circulating in the cooling flow channel 60. Coolant water which has been heated by heat exchange with each of the equipment devices such as the power feeder 46, the inverter device 48, and the electric motor 12 is distributed to the radiator 61. The electric fan 62 is provided for the radiator 61. In the radiator 61, a communication section through which air passes is formed, and air passes through the communication section by air blown from the electric fan 62, which results in the coolant water being cooled.

As illustrated in FIG. 4, the radiator 61 has an outer shape like a substantially rectangular thick plate and is erected at a right side of a rear portion of the swiveling frame 7. The radiator 61 is provided in such a manner as to be inclined with a rear side of the radiator positioned at an inner left and right side with respect to a front and rear direction of the swiveling frame 7 so as to be along an outer shape of the swiveling frame 7 which is formed in a substantially circular shape in a plane view. The electric fan 62 is provided integrally with the radiator 61 in the inner side face section 61a of the radiator 61 so as to cover most of the side face section 61a. The electric fan 62 is driven by electric power supplied from the commercial power source 49 or the battery unit 47.

As illustrated in FIG. 6, a pump 63, which is a coolant water pump, is provided at a downstream side of the radiator 61 in the cooling flow channel 60. When the pump 63 is driven, coolant water circulates through the cooling flow channel 60. The pump 63 is driven by electric power supplied from the commercial power source 49 or the battery unit 47.

The electric motor 12, the inverter device 48, and the power feeder 46 are connected in series in the cooling flow channel 60. With regard to the above-mentioned equipment devices, the power feeder 46, the inverter device 48, and the electric motor 12 are disposed in this order from an upstream side to a downstream side in a direction of coolant water flow starting from the radiator 61. In other words, the coolant water from radiator 61 passes through each equipment device in the order of the power feeder 46, the inverter device 48, and the electric motor 12, and returns to the radiator 61 (refer to an arrow A1).

As a flow channel section of coolant water starting from the radiator 61 and returning to the radiator 61, the cooling flow channel 60 has a first flow channel section 60a between the radiator 61 and the power feeder 46, a second flow channel section 60b between the power feeder 46 and the inverter device 48, a third flow channel section 60c between the inverter device 48 and the electric motor 12, and a fourth flow channel section 60d between the electric motor 12 and the radiator 61. These flow channel sections are composed of piping members such as hoses, connection metal fittings, and the like. The pump 63 is provided in the first flow channel section 60a.

The first flow channel section 60a has one end side thereof (upstream side) connected in communication with a connection portion at an outflow side of coolant water from the radiator 61 and the other end side thereof (downstream side) connected in communication with a connection portion at an inflow side of an intra-power-feeder flow channel, which is a flow channel of coolant water and is provided in the power feeder 46. The second flow channel section 60b has one end side thereof (upstream side) connected in communication with a connection portion at an outflow side of the intra-power-feeder flow channel and the other end side thereof (downstream side) connected in communication with a connection portion at an inflow side of an intra-inverter flow channel, which is a flow channel of coolant water and is provided in the inverter device 48.

The third flow channel section 60c has one end side thereof (upstream side) connected in communication with the connection portion at the outflow side of the intra-inverter flow channel and the other end side thereof (downstream side) connected in communication with a connection portion at an inflow side of an intra-motor flow channel, which is a flow channel of coolant water and is provided in the electric motor 12. The fourth flow channel section 60d has one end side thereof (upstream side) connected in communication with a connection portion at an outflow side of the intra-motor flow channel and the other end side thereof (downstream side) connected in communication with a connection portion at an inflow side of coolant water of the radiator 61.

The cooling flow channel 60 has a bypass flow channel section 65 that causes the coolant water to skirt around the power feeder 46. The bypass flow channel section 65 branches from the first flow channel section 60a in communication with the inflow side of the intra-power-feeder flow channel and joins the second flow channel section 60b in communication with the outflow side of the intra-power-feeder flow channel.

In other words, the bypass flow channel section 65 has one end side thereof (upstream side) connected in communication with a predetermined portion of the first flow channel section 60a and defines the connected portion as a branch section 66. The bypass flow channel section 65 also has the other end side thereof (downstream side) connected in communication with a predetermined portion of the second flow channel section 60b and defines the connected portion as a confluence section 67. The bypass flow channel section 65 is a flow channel portion connected in parallel to a flow channel portion that includes a flow channel portion at a downstream side from the branch section 66 of the first flow channel section 60a, a flow channel portion at an upstream side from the confluence section 67 of the second flow channel section 60b, and the intra-power-feeder flow channel positioned between these two flow channel portions.

In the above-mentioned cooling system, coolant water that flows out of the radiator 61 by drive of the pump 63 flows through the first flow channel section 60a and branches at the branch section 66 into a flow toward the power feeder 46 (refer to an arrow A2) and a flow toward the bypass flow channel section 65 (refer to arrow A3). The coolant water that flows toward the power feeder 46 passes through the intra-power-feeder flow channel to cool the power feeder 46 by heat exchange.

The coolant water that has been caused by the bypass flow channel section 65 to skirt joins coolant water discharged from the power feeder 46 at the confluence section 67. The coolant water that has joined at the confluence section 67 cools the inverter device 48 and the electric motor 12 by heat exchange with each device to return to the radiator 61. After being cooled by heat exchange in the radiator 61, the coolant water that flows out of the radiator 61 is forcibly fed by drive of the pump 63, and again flows branched at the branch section 66 into the power feeder 46 and the bypass flow channel section 65.

A flow rate of coolant water flowing through the bypass flow channel section 65 is adjusted to regulate a flow rate of coolant water through the intra-power-feeder flow channel of the power feeder 46. The flow rate of the coolant water flowing through the bypass flow channel section 65 is adjusted, for example, by the diameter or the length of each of piping members that constitute the bypass flow channel section 65.

According to the excavating work machine 1 of the present embodiment with the above-mentioned configuration, efficient cooling can be performed without any cost increase with regard to a configuration in which the electric motor 12 as a drive source, the power feeder 46, which is a device for supplying electric power to the electric motor 12, and the inverter device 48 are cooled by the water cooling system.

Since the excavating work machine 1 is provided with the bypass flow channel section 65 to the power feeder 46 in the cooling circuit, the cooling capability of the cooling circuit to the power feeder 46 can be adjusted by regulating the flow rate of the coolant water flowing through the bypass flow channel section 65. As a result of the above, surplus coolant water for cooling the power feeder 46 is caused by the bypass flow channel section 65 to skirt around the power feeder 46 and is directed at a downstream side of the power feeder 46, thereby being capable of efficiently obtaining cooling action of the coolant water cooled by the radiator 61 and of efficiently cooling the equipment devices through the overall cooling system.

The power feeder 46 may have a prescribed upper limit of a flow rate of coolant water flowing through the intra-power-feeder flow channel. In this case, when coolant water exceeding the upper limit is supplied to the power feeder 46, flow channel resistance increases to obstruct a flow of the coolant water throughout the overall cooling circuit, thereby obtaining insufficient cooling action. Therefore, the bypass flow channel section 65 is provided to adjust the flow rate of the coolant water passing through the power feeder 46, thereby being capable of preventing more coolant water than is needed from being supplied to the power feeder 46 and of efficiently obtaining the cooling action on each equipment device by heat exchange of the coolant water through the overall cooling circuit. In addition, a simple configuration in which the bypass flow channel section 65 is provided can suppress manufacturing cost.

In addition, according to the cooling system of the present embodiment, the electric motor 12 is disposed at a downstream side of the power feeder 46. This configuration allows the flow rate of the coolant water flowing through the bypass flow channel section 65 to be adjusted, which results in making it possible to suppress the manufacturing cost with a simple configuration as well as adjust the cooling capability by the cooling circuit for the electric motor 12 disposed at the downstream side of the power feeder 46.

It is noted that this cooling system according to the present embodiment can have a three-way valve disposed at the branch section 66 of the bypass flow channel section 65. By adopting such a configuration, for example, in a case where the power feeder 46 does not have to be cooled, the flow channel can be switched so that the flow channel to the power feeder 46 side through operation of the three-way valve is shut off to direct all of the coolant water flowing in the first flow channel section 60a to the bypass flow channel section 65. On the contrary, the flow channel can be switched so that the flow channel to the bypass flow channel section 65 side through operation of the three-way valve is shut off to direct all of the coolant water flowing in the first flow channel section 60a to the power feeder 46 side.

### Second Embodiment

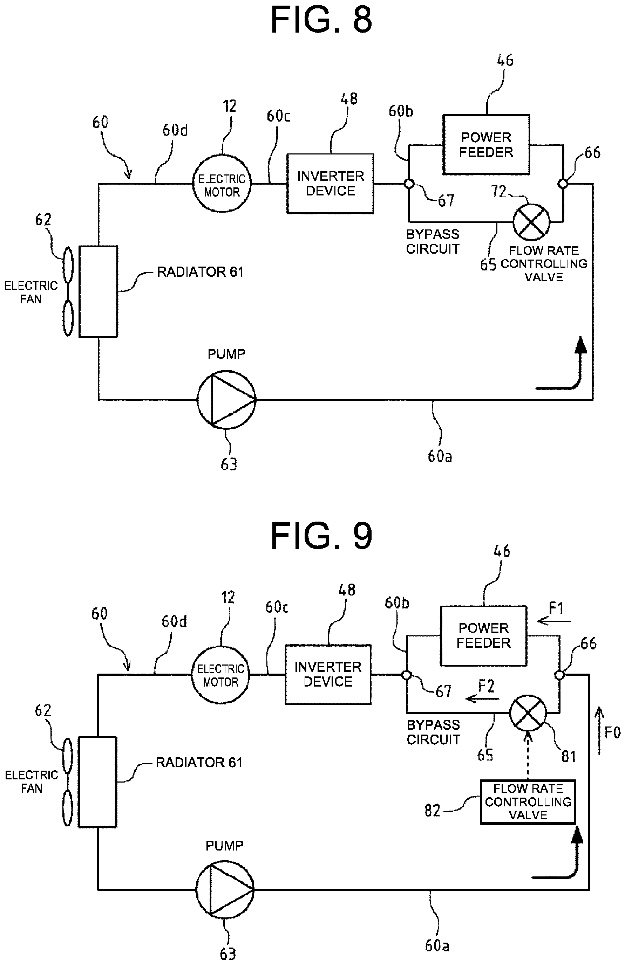

Descriptions will be made on a second embodiment according to the present invention with reference to FIG. 7 and FIG. 8. Each of embodiments described below relates to a cooling system provided by an excavating work machine 1. In descriptions of each embodiment below, configurations that are common with other embodiments will be attached with the same symbols, and the descriptions thereof will be omitted from as appropriate.

As illustrated in FIG. 7, in this cooling system according to the present embodiment, a cooling flow channel 60 has a flow rate controlling valve 71 as a flow rate adjusting section that regulates a flow rate of coolant water passing through a bypass flow channel section 65.

The flow rate controlling valve 71 is a throttle valve that is provided at a predetermined portion of the bypass flow channel section 65 and in which a cross-sectional area of a flow channel (conduit) provided is changed to limit a flow rate of coolant water flowing in the bypass flow channel section 65. The flow rate controlling valve 71 has an operation section such as a handle that is rotatably operated by means of a predetermined tool and the like, and is configured to change the cross-sectional area of the flow channel through operation of the operation section. The cross-sectional area of the flow channel at the flow rate controlling valve 71 is narrowed to reduce the flow rate of coolant water flowing through the bypass flow channel section 65 while being widened to increase the flow rate of the coolant water flowing through the bypass flow channel section 65.

A configuration of the cooling system according to the present embodiment enables the flow rate of the coolant water flowing through the bypass flow channel section 65 to be easily adjusted through operation of the flow rate controlling valve 71 without any change of the diameter or the length of each of piping members that constitute the bypass flow channel section 65. This makes it possible to easily and appropriately adjust the flow rate of the coolant water flowing through the bypass flow channel section 65 in accordance with, for example, a specification of the power feeder 46 and a circuit configuration of the cooling circuit, thereby achieving more efficient cooling.

In particular, according to the present embodiment, since an inverter device 48 and an electric motor 12 are provided at a downstream side of the power feeder 46, the flow rate controlling valve 71 in the bypass flow channel section 65 adjusts the flow rate, thereby being capable of suppressing manufacturing cost and easily adjusting cooling capability to a configuration of each device. This enables the cooling circuit as a whole to be cooled more efficiently.

### (Modified Example)

Descriptions will be made on a modified example according to the second embodiment is described with reference to FIG. 8. As illustrated in FIG. 8, in this modified example, the cooling flow channel 60 has a flow rate controlling valve 72 as a flow rate adjusting section that regulates a flow rate of the coolant water passing through the bypass flow channel section 65.

The flow rate controlling valve 72 is a solenoid valve that is provided at a predetermined portion of the bypass flow channel section 65 and that changes a cross-sectional area of a flow channel (conduit) by electromagnetic operating. The flow rate controlling valve 72 has a configuration that changes the cross-sectional area of the flow channel by operating upon receiving a control signal from a control section, which is not illustrated. It is noted that the flow rate controlling valve 72 is not limited to an electric type but may also be a hydraulic type or a pneumatic type.

According to a configuration in which the bypass flow channel section 65 has the flow rate controlling valve 72 as a flow rate adjusting section, it is possible to automatically control a flow rate in the bypass flow channel section 65 in accordance with operating manners of various kinds of equipment devices in the excavating work machine 1. This enables the flow rate of the coolant water flowing through the bypass flow channel section 65 to be adjusted automatically and appropriately in accordance with the operating manner of the excavating work machine 1, thereby achieving more efficient cooling.

### Third Embodiment

Descriptions will be made on a third embodiment according to the present invention with reference to FIG. 5 and FIG. 9. As illustrated in FIG. 9, in this cooling system according to the present embodiment, a cooling flow channel 60 has a flow rate controlling valve 81 as a flow rate adjusting section that adjusts a flow rate of coolant water passing through a bypass flow channel section 65, and a flow rate controlling section 82 that controls the adjustment of the flow rate of the coolant water by the flow rate controlling valve 81.

The flow rate controlling valve 81 is a solenoid valve that is provided at a predetermined portion of the bypass flow channel section 65 and that changes a cross-sectional area of a flow channel (conduit) by electromagnetic operating. The flow rate controlling valve 81 has an actuator that causes a valve body to operate in response to control signals (operation signals) from the flow rate controlling section 82 and changes the cross-sectional area of the flow channel by operating upon receiving the control signals from the flow rate controlling section 82.

The flow rate controlling section 82 controls an operating of the flow rate controlling valve 81 so that the flow rate of the coolant water in the bypass flow channel section 65 can be changed in accordance with a power feeding mode to be switched through operation of the mode changeover switch as described above. Therefore, the flow rate controlling section 82 is configured to directly or indirectly receive an input of an instruction signal from the mode changeover switch and to control the flow rate controlling valve 81 on the basis of the instruction signal from the mode changeover switch. The flow rate controlling section 82 is composed of a microcomputer and the like and controls the flow rate controlling valve 81 in accordance with the power feeding mode on the basis of a preset program and the like.

A specific manner in which the flow rate controlling valve 81 is controlled by the flow rate controlling section 82 is as follows. The flow rate controlling section 82 controls the flow rate controlling valve 81 so that a bypass flow rate that is a flow rate of the coolant water passing through the bypass flow channel section 65 in a battery power feeding mode (first mode) for supplying electric power to an electric motor 12 only by a battery unit 47 is greater than a bypass flow rate in an external power feeding mode (second mode) for supplying electric power to the electric motor 12 from outside by a power feeder 46. In addition, the flow rate controlling section 82 controls the flow rate controlling valve 81 so that the bypass flow rate in the battery power feeding mode (first mode) is greater than a bypass flow rate in a power storage mode (third mode) for storing electric power, which is supplied from outside by the power feeder 46, in the battery unit 47.

As is illustrated in FIG. 9, it is defined that a flow rate per unit time of coolant water flowing in a first flow channel section 60a at an upstream side from a branch section 66 is as a basic flow rate F0, that a flow rate per unit time of coolant water flowing from the branch section 66 to the power feeder 46 side is as a power feeder side flow rate F1, and that a flow rate per unit time of coolant water flowing from the branch section 66 to the bypass flow channel section 65 is as a bypass flow rate F2. In other words, the basic flow rate F0 equals to the power feeder side flow rate F1 plus the bypass flow rate F2. The basic flow rate F0 is assumed to be constant regardless of any power feeding mode.

The flow rate controlling section 82 controls an operating of the flow rate controlling valve 81 so that a first bypass flow rate, which is the bypass flow rate F2 in the battery feeding mode illustrated in FIG. 5A, is greater than a second bypass flow rate, which is the bypass flow rate F2 in the external power feeding mode illustrated in FIG. 5B.

In addition, the flow rate controlling section 82 controls the operating of the flow rate controlling valve 81 so that a first bypass flow in the battery power feeding mode illustrated in FIG. 5A is greater than a third bypass flow rate, which is the bypass flow rate F2 in the power storage mode illustrated in FIG. 5C.

In particular, in the battery power feeding mode illustrated in FIG. 5A, the flow rate controlling valve 81 is controlled by the flow rate controlling section 82 so that the bypass flow rate F2 is greater than the power feeder side flow rate F1 (F1 < F2). This is based on the following reason.

Since the power feeder 46 does not supply electric power from a commercial power source 49 and turns into a substantially non-operating state, priority of cooling the power feeder 46 is set lower in comparison with an inverter device 48 in an operating state. Therefore, a flow rate of coolant water for cooling the power feeder 46 (power feeder side flow rate F1) is smaller than the bypass flow rate F2, and the inverter device 48 is cooled preferentially.

Moreover, in the external power feeding mode illustrated in FIG. 5B, for example, the flow rate controlling valve 81 is controlled by the flow rate controlling section 82 so that the bypass flow rate F2 approximately equals to the feeder side flow rate F1 (F1≈F2). This is based on the following reason.

In the external power feeding mode, there are cases of supplying electric power from the battery unit 47 to the electric motor 12 and charging the battery unit 47 from the commercial power source 49 by the power feeder 46 in addition to supplying electric power to the electric motor 12 from the commercial power source 49 by the power feeder 46. This requires each of the power feeder 46 and the inverter device 48 to be cooled. Therefore, the flow rate of coolant water for cooling the power feeder 46 (power feeder side flow rate F1) equals to the bypass flow rate F2, and each of the power feeder 46 and the inverter device 48 is cooled equally.

Furthermore, in the power storage mode illustrated in FIG. 5C, the flow rate controlling valve 81 is controlled by the flow rate controlling section 82 so that the bypass flow rate F2 is smaller than the power feeder side flow rate F1 (F1 > F2). This is based on the following reason.

In the power storage mode, since the battery unit 47 does not supply electric power to the electric motor 12 via the inverter device 48, which causes the inverter device 48 to turn into a substantially non-operating state, priority of cooling the inverter device 48 is set lower in comparison with the power feeder 46 in an operating state. Therefore, the flow rate of coolant water for cooling the power feeder 46 (power feeder side flow rate F1) is greater than the bypass flow rate F2, and the power feeder 46 is cooled preferentially.

As described above, in the cooling system according to the present embodiment, the flow rate controlling valve 81 that controls the bypass flow rate is controlled by the flow rate controlling section 82 so that the bypass flow rate in the battery power feeding mode is greater than the bypass flow rate in the external power feeding mode and the power storage mode.

According to a configuration of the cooling system corresponding to the present embodiment, cooling capability to the power feeder 46 can be actively increased in a state in which the power feeder 46 operates, thereby being capable of taking advantage of the cooling capability by coolant water efficiently in accordance with the power feeding mode. This results in suppressing manufacturing cost and achieving more efficient cooling of the cooling circuit as a whole more efficiently.

### Fourth Embodiment

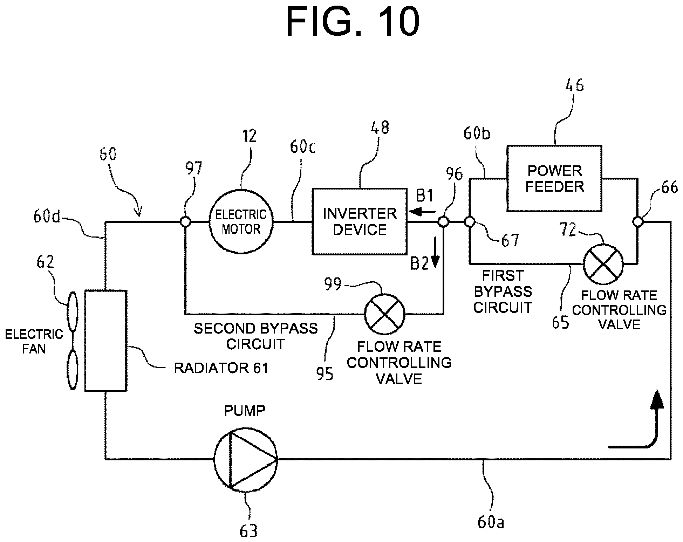

Descriptions will be made on a fourth embodiment of the present invention with reference to FIG. 10. As illustrated in FIG. 10, in a cooling system according to the present embodiment, a bypass flow channel section 65 that causes coolant water to skirt around a power feeder 46 is defined as a first bypass flow channel section in a cooling flow channel 60, and in addition to the bypass flow channel section 65, the cooling flow channel 60 has a second bypass flow channel section 95 that causes coolant water to skirt around an inverter device 48 and an electric motor 12. The second bypass flow channel section 95 branches from a second flow channel section 60b, which is a flow channel section in communication with an inflow side of an intra-inverter flow channel of the inverter device 48 and joins a fourth flow channel section 60d, which is a flow channel section in communication with an outflow side of an intra-motor flow channel of an electric motor 12.

In other words, the second bypass flow channel section 95 has one end side thereof (upstream side) connected in communication with a predetermined portion of the second flow channel section 60b and defines the connected portion as a branch section 96. The second bypass flow channel section 95 also has the other end side thereof (downstream side) connected in communication with a predetermined portion of the fourth flow channel section 60d and defines the connected portion as a confluence section 97. In the second flow channel section 60b, the branch section 96 is disposed at a downstream side from the confluence section 67 with respect to the bypass flow channel section 65. The second bypass flow channel section 95 is a flow channel portion connected in parallel to a flow channel portion at a downstream side from the branch section 96 of the second flow channel section 60b, a flow channel portion at an upstream side from the confluence section 97 of the fourth flow channel section 60d, and a flow channel portion that including an intra-power-feeder flow channel and an intra-motor flow channel that are positioned between these two flow channel portions.

Thus, in a case where in the cooling system according to the present embodiment, the branch section 66 and the confluence section 67 of the bypass flow channel section 65 are defined as a first branch section and a first confluence section, respectively, the cooling system has the branch section 96 at an upstream side of the second bypass flow channel section 95 as a second branch section and the confluence section 97 at a downstream side of the second bypass flow channel section 95 as a second confluence section.

In the above-mentioned configuration of cooling system, coolant water flowing in the second flow channel section 60b branches at the branch section 96 into a flow toward the inverter device 48 (refer to an arrow B1) and a flow toward the second bypass flow channel section 95 (refer to an arrow B2). The coolant water that flows toward the inverter device 48 passes through the intra-inverter flow channel to cool the inverter device 48 by heat exchange, and then, passes through the intra-motor flow channel from the third flow channel section 60C to cool the electric motor 12 by heat exchange.

Coolant water that has been caused by the second bypass flow channel section 95 to skirt joins coolant water discharged from the electric motor 12 at the confluence section 97. The coolant water that has joined at the confluence section 97 returns to the radiator 61. After being cooled by heat exchange in the radiator 61, the coolant water flows out of the radiator 61, is forcibly fed by the drive of a pump 63 to flow branched at the branch section 66 into the power feeder 46 side and the bypass flow channel section 65, and joins at the confluence section 67. Then, the coolant water again flows branched at the branch section 96 into the inverter device 48 side and the second bypass flow channel section 95.

Additionally, in the cooling system according to the present embodiment, the cooling flow channel 60 has a second flow rate controlling valve 99 that adjusts a flow rate of the coolant water passing through the second bypass flow channel section 95. The second flow rate controlling valve 99 is a second flow rate adjusting section in a case where a flow rate controlling valve 72 provided in the bypass flow channel section 65 is set as a first flow rate adjusting section.

The second flow rate controlling valve 99 is a solenoid valve that is provided at a predetermined portion of the second bypass flow channel section 95 and that changes a cross-sectional area of a flow channel (conduit) by electromagnetic operating. The second flow rate controlling valve 99 has a configuration that changes the cross-sectional area of the flow channel by operating upon receiving a control signal from a control section, which is not illustrated. It is noted that the second flow rate controlling valve 99 is not limited to an electric type but may also be a hydraulic type or a pneumatic type. In addition, the flow rate of coolant water flowing through the second bypass flow channel section 95 is adjusted, for example, by the diameter or the length of each of piping members that constitute the second bypass flow channel section 95.

According to the configuration of the cooling system corresponding to the present embodiment, since the excavating work machine 1 is provided with the second bypass flow channel section 95 for the inverter device 48 and the electric motor 12 in the cooling circuit, cooling capability of the cooling circuit to the inverter device 48 and the electric motor 12 can be adjusted by regulating the flow rate of the coolant water flowing through the second bypass flow channel section 95. As a result of the above, surplus coolant water for cooling the inverter device 48 and the electric motor 12 is caused by the second bypass flow channel section 95 to skirt around the inverter device 48 and the electric motor 12 and is directed at a downstream side of the electric motor 12, thereby being capable of efficiently obtaining cooling action of the coolant water cooled by the radiator 61 and of efficiently cooling the equipment devices through the overall cooling system.

Each of the inverter device 48 and the electric motor 12 may have a prescribed upper limit of a flow rate of coolant water flowing through the intra-inverter flow channel and the intra-motor flow channel. In this case, when coolant water exceeding the upper limit is supplied to the inverter device 48 or the electric motor 12, flow channel resistance increases to obstruct a flow of the coolant water throughout the overall cooling circuit, thereby obtaining insufficient cooling action. Therefore, the second bypass flow channel section 95 is provided to adjust the flow rate of the coolant water passing through the inverter device 48 and the electric motor 12, thereby being capable of preventing more coolant water than is needed from being supplied to the inverter device 48 and the electric motor 12 and of efficiently obtaining the cooling action on each equipment device by heat exchange of the coolant water through the overall cooling circuit. In addition, a simple configuration in which the second bypass flow channel section 95 is provided can suppress manufacturing cost.

According to the present embodiment, the second bypass flow channel section 95 has the second flow rate controlling valve 99. The above-mentioned configuration enables the flow rate of the coolant water flowing through the second bypass flow channel section 95 to be easily adjusted through operation of the second flow rate controlling valve 99 without any change of the diameter or the length of each of piping members that constitute the second bypass flow channel section 95. This makes it possible to easily and appropriately adjust the flow rate of the coolant water flowing through the second bypass flow channel section 95 according to, for example, the specifications of the inverter device 48 and the electric motor 12 and the circuit configuration of the cooling circuit, thereby achieving more efficient cooling.

In particular, according to a configuration in which the second flow rate controlling valve 99 is provided as a second flow rate adjusting section, it is possible to automatically control a flow rate in the second bypass flow channel section 95 in accordance with operating manners of various kinds of equipment devices in the excavating work machine 1. This enables the flow rate of the coolant water flowing through the second bypass flow channel section 95 to be adjusted automatically and appropriately in accordance with the operating manner of the excavating work machine 1, thereby achieving more efficient cooling. It is noted that the second flow rate adjusting section may have an operation section such as a handle that is rotatably operated by means of a predetermined tool and the like and may have a throttle valve configured to change the cross-sectional area of the flow channel through operation of the operation section.

### Fifth Embodiment

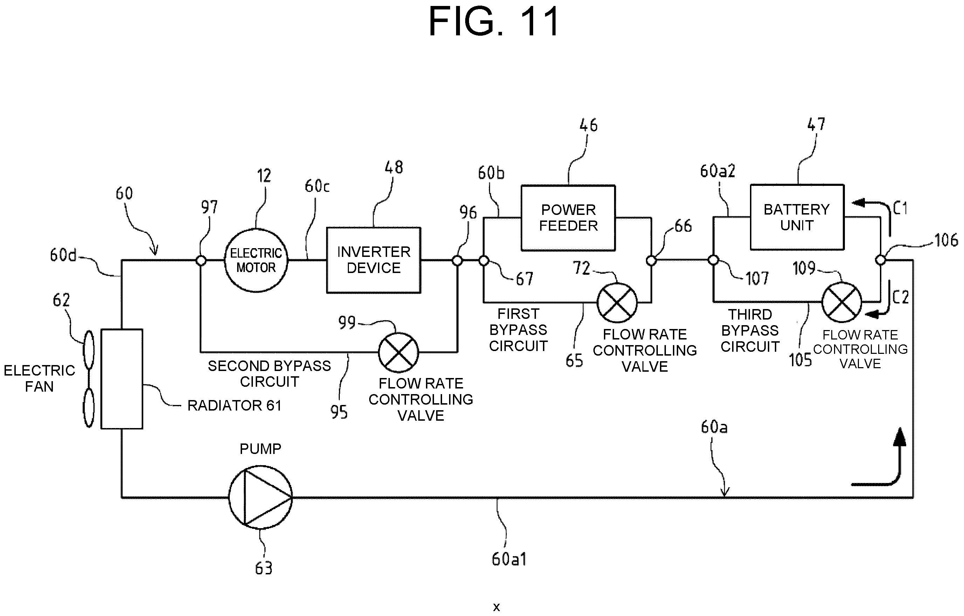

Descriptions will be made on a fifth embodiment of the present invention with reference to FIG. 11. As illustrated in FIG. 11, in a cooling system according to the present embodiment, there is provided in a cooling flow channel 60 a battery unit 47 for supplying electric power to an electric motor 12. The battery unit 47 is disposed at an upstream side of a flow of coolant water starting from a radiator 61 in the cooling flow channel 60 to the electric motor 12, an inverter device 48 and a power feeder 46.

In other words, the first flow channel section 60a between the radiator 61 and the power feeder 46 has a first upstream side flow channel section 60a1 between the radiator 61 and the battery unit 47 and a first downstream side flow channel section 60a2 between the battery unit 47 and the power feeder 46.

The first upstream side flow channel section 60a1 has one end side thereof (upstream side) connected in communication with a connection portion at an outflow side of coolant water of the radiator 61 and the other end side thereof (downstream side) connected in communication with a connection portion of an inflow side of an intra-battery flow channel, which is a flow channel of coolant water and is provided in the battery unit 47. The first downstream flow side channel section 60a2 has one end side thereof (upstream side) connected in communication with a connection portion at an outflow side of the intra-battery flow channel and the other end side thereof (downstream side) connected in communication with a connection portion of an inflow side of an intra-power-feeder flow channel of the power feeder 46.

In addition to a bypass flow channel section 65 and a second bypass flow channel section 95, the cooling flow channel 60 has a third bypass flow channel section 105, which is a bypass flow channel section for a battery that causes coolant water to skirt around the battery unit 47. The third bypass flow channel section 105 branches from the first upstream side flow channel section 60a1, which is a flow channel section in communication with the inflow side of the intra-battery flow channel of the battery unit 47 and joins the first downstream side flow channel section 60a2, which is a flow channel section in communication with the outflow side of the intra-battery flow channel.

In other words, the third bypass flow channel section 105 has one end side thereof (upstream side) connected in communication with a predetermined portion of the first upstream side flow channel section 60a1 and defines the connected portion as a branch section 106.
The third bypass flow channel section 105 also has the other end side thereof (downstream side) connected in communication with a predetermined portion of the first downstream side flow channel section 60a2 and defines the connected portion as a confluence section 107. In the first downstream side flow channel section 60a2, the confluence section 107 is disposed at an upstream side from the branch section 66 of the bypass flow channel section 65. The third bypass flow channel section 105 is a flow channel portion connected in parallel to a flow channel portion that includes a flow channel portion at a downstream side from the branch section 106 of the first upstream side flow channel section 60a1, a flow channel portion at an upstream side from the confluence section 107 of the first downstream side flow channel section 60a2, and the intra-battery flow channel that is positioned between these two flow channel portions.

Thus, in a case where in the cooling system according to the present embodiment, it is defined that the branch section 66 and the confluence section 67 of the bypass flow channel section 65 are as a first branch section and a first confluence section, respectively, and that the branch section 96 and the confluence section 97 for the second bypass flow channel section 95 are as a second branch section and a second confluence section, respectively, the cooling system has the branch section 106 at an upstream side of the third bypass flow channel section 105 as a third branch section and the confluence section 107 at a downstream side of the third bypass flow channel section 105 as a third confluence section.

In the above-mentioned configuration of cooling system, coolant water that flows out of the radiator 61 by drive of a pump 63 flows through the first upstream side flow channel section 60a1 and branches at the branch section 106 into a flow toward the battery unit 47 (refer to an arrow C1) and a flow toward the third bypass flow channel section 105 (refer to an arrow C2). The coolant water that flows toward the battery unit 47 passes through the intra-battery flow channel to cool the battery unit 47 by heat exchange.

The coolant water that has been caused by the third bypass flow channel section 105 to skirt joins coolant water discharged from the battery unit 47 at the confluence section 107. The coolant water that has joined at the confluence section 107 branches at the branch section 66 into a flow toward the power feeder 46 and a flow toward the bypass flow channel section 65.

Additionally, in the cooling system according to the present embodiment, the cooling flow channel 60 has a third flow rate controlling valve 109 as a flow rate adjusting section for a battery that adjusts a flow rate of the coolant water passing through the third bypass flow channel section 105. The third flow rate controlling valve 109 is a third flow rate adjusting section in a case where the flow rate controlling valve 72 provided in the bypass flow channel section 65 is set as a first flow rate adjusting section and the second flow rate controlling valve 99 provided in the second bypass flow channel section 95 is set as a second flow rate adjusting section.

The third flow rate controlling valve 109 is a solenoid valve that is provided at a predetermined portion of the third bypass flow channel section 105 and that changes a cross-sectional area of a flow channel (conduit) by electromagnetic operating. The third flow rate controlling valve 109 has a configuration that changes the cross-sectional area of the flow channel by operating upon receiving a control signal from a control section, which is not illustrated. It is noted that the third flow rate controlling valve 109 is not limited to an electric type but may also be a hydraulic type or a pneumatic type. In addition, the flow rate of coolant water flowing through the third bypass flow channel section 105 is adjusted, for example, by the diameter or the length of each of piping members that constitute the third bypass flow channel section 105.

According to the configuration of the cooling system corresponding to the present embodiment, since the excavating work machine 1 includes the battery unit 47 as an object to be cooled in a cooling circuit and is provided with the third bypass flow channel section 105 for the battery unit 47 in the cooling circuit, cooling capability of the cooling circuit to the battery unit 47 can be adjusted by regulating the flow rate of the coolant water flowing through the third bypass flow channel section 105. As a result of the above, surplus coolant water for cooling the battery unit 47 is caused by the third bypass flow channel section 105 to skirt around the battery unit 47 and is directed at a downstream side of the battery unit 47, thereby being capable of efficiently obtaining cooling action of the coolant water cooled by the radiator 61 and of efficiently cooling the equipment devices through the overall cooling system.

The battery unit 47 may have a prescribed upper limit of a flow rate of coolant water flowing through the intra-battery flow channel. In this case, when coolant water exceeding the upper limit is supplied to the battery unit 47, flow channel resistance increases to obstruct a flow of the coolant water throughout the overall cooling circuit, thereby obtaining insufficient cooling action. Therefore, the third bypass flow channel section 105 is provided to adjust the flow rate of the coolant water passing through the battery unit 47 in accordance with an operating state such as a discharge/storage state of the battery unit 47, thereby being capable of preventing more coolant water than is needed from being supplied to the battery unit 47 and of efficiently obtaining the cooling action on each equipment device by heat exchange of the coolant water through the overall cooling circuit. In addition, a simple configuration in which the third bypass flow channel section 105 is provided can suppress manufacturing cost.

According to the present embodiment, the third bypass flow channel section 105 also has the third flow rate controlling valve 109. The above-mentioned configuration enables the flow rate of the coolant water flowing through the third bypass flow channel section 105 to be easily adjusted through operation of the third flow rate controlling valve 109 without any change of the diameter or the length of each of piping members that constitute the third bypass flow channel section 105. This makes it possible to easily and appropriately adjust the flow rate of the coolant water flowing through the third bypass flow channel section 105 in accordance with, for example, the specifications of the battery unit 47 and the circuit configuration of the cooling circuit, thereby achieving more efficient cooling.

In particular, according to a configuration in which the third flow rate controlling valve 109 is provided as a third flow rate adjusting section, it is possible to automatically control a flow rate in the third bypass flow channel section 105 in accordance with operating manners of various kinds of equipment devices in the excavating work machine 1. This enables the flow rate of the coolant water flowing through the third bypass flow channel section 105 to be adjusted automatically and appropriately in accordance with the operating manner of the excavating work machine 1, thereby achieving more efficient cooling. It is noted that the third flow rate adjusting section may have an operation section such as a handle that is rotatably operated by means of a predetermined tool and the like and may have a throttle valve configured to change the cross-sectional area of the flow channel through operation of the operation section.

In addition, according to the cooling system of the present embodiment, the battery unit 47 is disposed at an upstream side from the electric motor 12, the inverter device 48, and the power feeder 46. In particular, in the present embodiment, the battery unit 47 is disposed at the most upstream side of a flow of coolant water starting from a radiator 61. This configuration enables the battery unit 47 to be disposed at a position where comparatively high cooling action can be obtained, and allows the flow rate of the coolant water flowing through the third bypass flow channel section 105 to be adjusted, which results in making it possible to suppress the manufacturing cost with the simple configuration as well as to adjust the cooling capability by the cooling circuit for the battery unit 47.

Furthermore, the cooling system according to the present embodiment can employ a flow rate controlling section that is configured to directly or indirectly receive an input of an instruction signal from a mode changeover switch and to control each controlling valve on the basis of the instruction signal from the mode changeover switch as a control section controlling the flow rate controlling valve 72 of the bypass flow channel section 65, the second flow rate controlling valve 99 of the second bypass flow channel section 95, and the third flow rate controlling valve 109 of the third bypass flow channel section 105. This configuration makes it possible to control each flow rate controlling valve in accordance with the power feeding mode.

Specifically, for example, in a case of a battery power feeding mode (refer to FIG. 5A), the battery unit 47 and the inverter device 48, which mainly operate, should be cooled preferentially in comparison with the power feeder 46. This results in increasing the bypass flow rate by the flow rate controlling valve 72 in the bypass flow channel section 65 for the power feeder 46 in the battery power feeding mode. On the other hand, the bypass flow rate is throttled by the third flow rate controlling valve 109 in the third bypass flow channel section 105 for the battery unit 47 and is throttled by the second flow rate controlling valve 99 in the second bypass flow channel section 95 for the inverter device 48.

Additionally, in a case of an external power feeding mode (refer to FIG. 5B), the power feeder 46 and the inverter device 48, which mainly operate, should be cooled preferentially in comparison with the battery unit 47. This results in increasing the bypass flow rate by the third flow rate controlling valve 109 in the third bypass flow channel section 105 for the battery unit 47 in the external power feeding mode. On the other hand, the bypass flow rate is throttled by the flow rate controlling valve 72 in the bypass flow channel section 65 for the power feeder 46 and is throttled by the second flow rate controlling valve 99 in the second bypass flow channel section 95 for the inverter device 48.

Additionally, in a case of a power storage mode (refer to FIG. 5C), the battery unit 47 and the power feeder 46, which mainly operate when accumulating electricity, should be cooled preferentially in comparison with the inverter device 48. As a result, in the power storage mode, the bypass flow rate is throttled by the third flow rate controlling valve 109 of the third bypass flow channel section 105 for the battery unit 47 and is throttled by the flow rate controlling valve 72 of the bypass flow channel section 65 for the power feeder 46. On the other hand, the bypass flow rate is increased by the second flow rate controlling valve 99 in the second bypass flow channel section 95 for the inverter device 48.

Thus, this cooling system of the present embodiment makes it possible to control each flow rate controlling valve in accordance with the power feeding mode. This enables an optimum cooling manner corresponding to an operating state of each equipment device in each power feeding mode to be achieved with a simple and inexpensive configuration.

### Sixth Embodiment

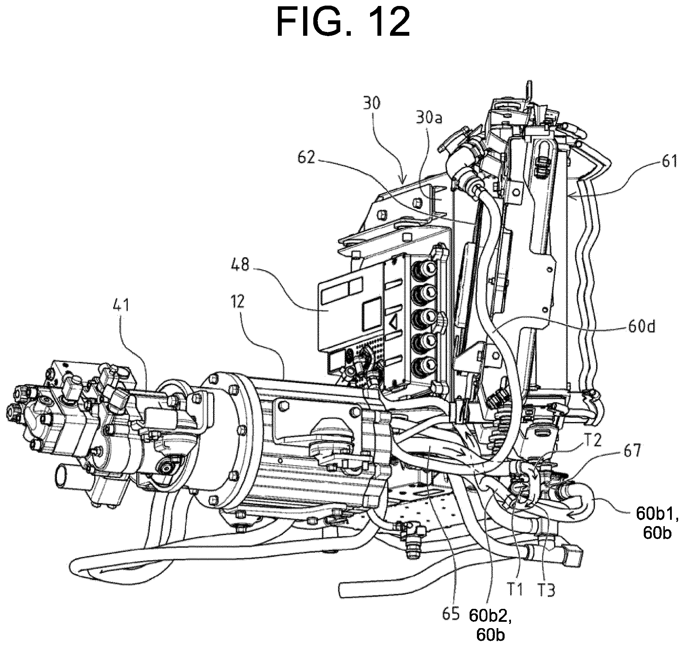

Descriptions will be made on a sixth embodiment of the present invention with reference to FIG. 12. The present embodiment relates to an arrangement of a confluence section 67 with respect to a bypass flow channel section 65 in a cooling system provided by an excavating work machine 1.

As illustrated in FIG. 12, according to the present embodiment, the confluence section 67 of the bypass flow channel section 65 for a second flow channel section 60b, which is a flow channel section in communication with an outflow side of an intra-power-feeder flow channel of a power feeder 46, is disposed below a radiator 61.

As illustrated in FIG. 12, in the second flow channel section 60b connecting the power feeder 46 and an inverter device 48, the confluence section 67 is a portion where a flow of coolant water from a second upstream side flow channel section 60b1 (refer to an arrow T1), which is a flow channel section at un upstream side from the confluence section 67, and a flow of coolant water from the bypass flow channel section 65 (refer to an arrow T2) join together. The coolant water joining at the confluence section 67 is directed to the inverter device 48 by a second downstream side flow channel section 60b2, which is a flow channel section at a downstream side from the confluence section 67 in the second flow channel section 60b (refer to an arrow T3).

The confluence section 67 is disposed at a swiveling frame 7 at a location below the radiator 61 so as to be hidden by the radiator 61 in a plane view with respect to the radiator 61 that is erected at a right side of a rear portion of a swiveling frame 7. The position below the radiator 61 is a position to the right of an electric motor 12 that is disposed at a rear portion of the swiveling frame 7. A vertical direction of the confluence section 67 is located within a range of a dimension in vertical direction of the electric motor 12. Piping members that constitute each of the second flow channel section 60b and the bypass flow channel section 65 are disposed in accordance with such an arrangement of the confluence section 67.

According to a configuration of the cooling system corresponding to the present embodiment, a space below the radiator 61 in the swiveling frame 7 can be effectively utilized. In particular, in a relatively small-sized mini-shovel such as the excavating work machine 1 according to the present embodiment, a layout of the device configuration in the swiveling frame 7 is largely limited, so that the arrangement of the confluence section 67 according to the present embodiment makes it possible to efficiently arrange piping members that constitute a cooling system in a limited space.

In addition, since the confluence section 67 of the bypass flow channel section 65 is disposed below the radiator 61, the confluence section 67 can be easily accessed by opening a rear cover section 32 of an upper swiveling body 20B. This causes improvement of maintainability for the bypass flow channel section 65.

The excavating work machine 1 according to the present embodiment is configured to be cooled by an air cooling system with respect to the battery unit 47. Specifically, as illustrated in FIG. 4, the battery unit 47 is mounted above the electric motor 12 at the rear portion of the swiveling frame 7. An electric fan 62 is located to the right of the battery unit 47, and the radiator 61 is located at a right side of the electric fan 62. In other words, the radiator 61 is disposed with respect to the battery unit 47 so as to face toward an inner side face section 61a where the electric fan 62 is provided.

According to this configuration, the battery unit 47 is disposed at an upstream side of the electric fan 62 in an air flow taken by the electric fan 62 into an exterior cover section of the upper swiveling body 20B. That is to say, the air taken into the exterior cover section of the upper swiveling body 20B cools the battery unit 47 and then, cools the radiator 61. Thus, fresh air can cool the battery unit 47.

As is described above, the battery unit 47 is cooled both by the water-cooling system by means of the cooling flow channel 60 and by the air cooling system with air taken into the exterior cover section of the upper swiveling body 20B. This enables the battery unit 47 to be efficiently cool, thereby improving cooling action in the cooling system.

Descriptions on the above-mentioned embodiments merely constitute examples according to the present invention, and the construction machine according to the present invention is not limited to the above-mentioned embodiments. Accordingly, it is a matter of course that a variety of modifications can be made in response to a design and the like within a scope without departing from technical spirit of the present invention even if such modifications are out of the embodiments described above. Further, the effects described in the present disclosure are merely illustrative and are not limited, and other effects may also be exerted. Configurations in each of the above-mentioned embodiments and configurations in the modified examples can be combined as appropriate.

The cooling system in each of the above-mentioned embodiments may include configurations other than those described above as objects to be cooled. With regard to an arrangement order of each configuration in the flow of coolant water starting from the radiator 61, an appropriate order can be adopted regardless of cooling capacity of each configuration. For example, the cooling system according to the first embodiment (refer to FIG. 6) may include the battery unit 47 as an object to be cooled. In this case, for example, the battery unit 47 may be disposed at a downstream side of the power feeder 46 even when the cooling capacity of the battery unit 47 is smaller than that of the power feeder 46.

### DESCRIPTION OF REFERENCE NUMERALS

1: excavating work machine (construction machine)
2: traveling device
7: swiveling frame
12: electric motor
20A: lower traveling body
20B: upper swiveling body
46: power feeder
47: battery unit (battery)
48: inverter device
49: commercial power source
60: cooling flow channel
60a: first flow channel section
60a1: first upstream side flow channel section
60a2: first downstream side flow channel section
60b: second flow channel section
60d: fourth flow channel section
61: radiator
62: electric fan
65: bypass flow channel section
66: branch section
67: confluence section
71: flow rate adjusting valve (flow rate adjusting section)
72: flow rate controlling valve (flow rate adjusting section)
81: flow rate controlling valve (flow rate adjusting section)
82: flow rate controlling section
95: second bypass flow channel section
99: second flow rate controlling valve (second flow rate adjusting section)
105: third bypass flow channel section (bypass flow channel section for a battery)
109: third flow rate controlling valve (flow rate adjusting section for a battery)

## Claims

1. A construction machine comprising;
an electric motor as a drive source,
a power feeder that supplies electric power to the electric motor from outside,
a cooling flow channel that circulates a cooling medium for cooling the electric motor and the power feeder, and
a radiator that cools the cooling medium flowing in the cooling flow channel, wherein
the cooling flow channel has a bypass flow channel section that branches from a flow channel section in communication with an inflow side of an intra-power-feeder flow channel, which is a flow channel of the cooling medium provided in the power feeder, that joins a flow channel section in communication with an outflow side of the intra-power-feeder flow channel, and that causes the cooling medium to skirt around the power feeder.

2. The construction machine according to claim 1, wherein
the electric motor is provided at a downstream side of a flow of the cooling medium starting from the radiator in the cooling flow channel with respect to the power feeder.

3. The construction machine to claim 1 or claim 2, wherein
the cooling flow channel has a flow rate adjusting section that adjusts a flow rate of the cooling medium that passes through the bypass flow channel section.

4. The construction machine to claim 3, further comprising: a battery that supplies electric power to the electric motor; and a flow rate controlling section that controls adjustment of a flow rate of the cooling medium by the flow rate adjusting section, wherein
the flow rate controlling section controls the flow rate adjusting section so that a bypass flow rate that is the flow rate of the cooling medium passing through the bypass flow channel section in a mode in which electric power supply to the electric motor is carried out only by the battery is larger than the bypass flow rate in a mode in which electric power supply to the electric motor is carried by the power feeder from outside or the bypass flow rate in a mode in which electric power from outside is stored in the battery by the power feeder.

5. The construction machine to claim 3 or claim 4, further comprising an inverter device that controls the electric motor, the inverter device being provided between the electric motor and the power feeder in the cooling flow channel, wherein
the cooling flow channel has
a second bypass flow channel section that branches from a flow channel section in communication with an inflow side of a flow channel of the cooling medium provided in the inverter device, that joins a flow channel section in communication with an outflow side of the flow channel of the cooling medium provided in the electric motor, and that causes the cooling medium to skirt around the inverter device and the electric motor, and
a second flow rate adjusting section that adjusts a flow rate of the cooling medium that passes through the second bypass flow channel section.

6. The construction machine according to any one of claim 1 to claim 5, wherein
the cooling flow channel, which is provided with a battery for supplying electric power to the electric motor, has
a bypass flow channel section for a battery that branches from a flow channel section in communication with an inflow side of an intra-battery flow channel, which is a flow channel of the cooling medium provided in the battery, that joins a flow channel section in communication with an outflow side of the intra-battery flow channel, and that causes the cooling medium to skirt around the battery, and
a flow rate adjusting section for a battery that adjusts a flow rate of the cooling medium passing through the bypass flow channel section for the battery.

7. The construction machine according to claim 6, wherein
the battery is provided with respect to the electric motor and the power feeder, at an upper stream side of a flow of the cooling medium starting from the radiator in the cooling flow channel.

8. The construction machine according to any one of claim 1 to claim 4, wherein
a confluence section of the bypass flow channel section with respect to a flow channel section in communication with the outflow side of the intra-power-feeder flow channel is disposed below the radiator.
